(19) Europäisches Patentamt
European Patent Office
Office européen des brevets

(11) Publication number: 0 007 758
B1

(12) EUROPEAN PATENT SPECIFICATION

(45) Date of publication of patent specification: 30.03.83

(51) Int. Cl.³: C 08 F 8/44, C 08 C 19/30

(21) Application number: 79301396.2

(22) Date of filing: 13.07.79

# (54) Alkyl ammonium ionomers.

(30) Priority: 17.07.78 US 924966

(43) Date of publication of application:
06.02.80 Bulletin 80/3

(45) Publication of the grant of the patent:
30.03.83 Bulletin 83/13

(84) Designated Contracting States:
BE DE FR GB IT NL

(56) References cited:
US - A - 3 219 639

(73) Proprietor: Exxon Research and Engineering Company
P.O.Box 390 180 Park Avenue
Florham Park New Jersey 07932 (US)

(72) Inventor: Brenner, Douglas
61 East Sherbrooke Parkway
Livingstone New Jersey (US)
Inventor: Oswald, Alexis A.
1098 Sunnyslope Drive
Mountainside, New Jersey (US)

(74) Representative: Field, Roger Norton et al,
ESSO Engineering (Europe) Ltd. Patents & Licences Apex Tower High Street
New Malden Surrey KT3 4DJ (GB)

EP 0 007 758 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Alkyl ammonium ionomers

This invention relates to the preparation and use of novel ionic polymers comprising alkyl ammonium, diammonium and polyammonium salts of polymers having one or more sulphonate groups.

This invention relates to ionic polymers. More particularly, this invention relates to ammonium salts of anionic polymers, i.e. polymers containing covalently bound negatively charged groups. Most particularly, this invention is concerned with novel compositions of matter comprising certain higher alkyl ammonium salts or quaternary polyammonium salts of polymers having incorporated therein one or more covalently bonded sulphonate radicals.

The particular ammonium salts of this invention may be represented as:

1. $$[C—A^-]_{p+1}\ R_3N^+ \!\!+\!\! Q—R_2N^+ \!\!+_{p} R$$

wherein C is one of a plurality of carbon atoms comprising a portion of an EPR, EPDM, or Butyl rubber polymer backbone chain of carbon atoms; $A^-$ is a sulphonate group, convalently bonded to one of the C carbon atoms. The R groups represent substituents of the nitrogen atom(s) which are each independently selected from hydrogen, $C_1$ to $C_{50}$ straight or branched chain acyclic, alicyclic, aryl, alkaryl and aralkyl radicals and substituted functional derivatives thereof, provided at least one of the R groups is a $C_{12}$ to $C_{50}$ straight or branched chain acyclic, alicyclic, aryl, alkaryl, aralkyl radical or a substituted functional derivative thereof. Each Q is independently selected from $C_1$ to $C_{40}$ divalent straight or branched chain alkylene, cycloalkylene, arylene, dialkylene-arylene radicals, a substituted functional derivative thereof or $—(CHY)_n—Z_m—(CHY)_n$ wherein Z is the hetero atom, oxygen or sulfur, m is zero or one, Y is hydrogen, said $C_1$ to $C_{50}$ radical or a substituted functional derivative of the radical and n is an integer of from 1 to 10 p is from zero (for a monoammonium counterion) to about 10, more preferably zero to about 4, and most preferably zero or one, and the ammonium counterion at least partially neutralizes said anionic acid radicals.

Other sulfonated salts of the present invention are represented by the formula:

2. $$[C—SO_3^-]_{p+1}\ R'_3N^+ \!\!+\!\! Q—R'_2N^+ \!\!+_{p} R'$$

wherein C is one of a plurality of carbon atoms comprising a portion of the polymeric backbone chain of carbon atoms of an EPR, EPDM or Buryl rubber polymer and wherein the C is in a single polymer chain, the $—SO_3^-$ groups are covalently bonded to one or more of the C carbon atoms in one or more of the polymeric backbone chains wherein each Q is independently selected from $C_1$ to $C_{40}$ divalent straight or branched chain alkylene, cycloalkylene, arylene, dialkylene-arylene radicals, a substituted functional derivative thereof or $—(CHY)_n—Z_m—(CHY)_n$, wherein Z is the hetero atom, oxygen or sulfur, m is zero or one, Y is hydrogen, said $C_1$ to $C_{50}$ radical or a substituted functional derivative of the radical and n is an integer of from 1 to 10, wherein p is from one (for a diammonium counterion) to about 10, more preferably one to about 4, and most preferably one, and wherein the R′ groups are each independently selected from $C_1$ to $C_{11}$, preferably $C_1$ to $C_4$, most preferably $C_1$ straight or branched chain acyclic, alicyclic, aryl, alkaryl or aralkyl radicals and substituted functional derivatives thereof.

For example, in formulae (3) and (4) below, diammonium and triammonium salts of formula 2 (p equal to 1 and 2 in formula (2)) are schematically represented as:

3. $$—C—SO_3^-\ R'_3N^+—Q—{}^+NR'_3\ {}^-O_3S—C—$$

4. $$—C—SO_3^-\ R'_3N^+—Q—{}^+NR'_2—Q—{}^+NR'_3\ {}^-O_3S—C—$$

$$\sim\!\!C(SO_3^-)\!\!\sim$$

where the symbols have the same meanings as in formula 2.

The ionically cross-linked ionomers of this invention may be readily prepared from the sulfonate precursor, for example a free sulfonic acid, by direct neutralization, either in bulk or in solution with an alkyl ammonium hydroxide wherein the cation is selected from one of the specified classes, or by a primary, secondary or tertiary amine from one of the specified classes, or by a combination of these neutralizing agents. Another means of preparation is by double decomposition (metathesis) of a salt of the sulfonic acid with an alkyl ammonium salt of an acid which is weaker (i.e. has a lower/$pK_a$) than the

sulfonic acid, or by double decomposition in a multiphase fluid medium in which the salt of the displaced counterion is selectively removed from the phase containing the polymer to a phase in which the ammonium ionomer is substantially insoluble.

The properties and utility of the ionic salts of this invention vary over a wide range depending on the structure of the anionic polymer, the average molecular weight and molecular weight distribution the degree of neutralization of the anionic groups in the polymer, the mole concentration of the alkyl ammonium salt groups in the polymer, and in particular, the type and variety of the substituents attached to the nitrogen. The ionic salts can range from water-soluble polyelectrolytes useful as adhesives and thickening agents to elastomers or hard resins which are thermoplastic at elevated temperatures permitting the products to be extruded, injection molded, vacuum formed and sheeted.

A particularly useful form for an ionomer is a water-insoluble elastomer which can be melt fabricated and then used without curing, and which can subsequently be reprocessed at elevated temperature since the ionomer does not contain permanent crosslinks.

I. Sulfonate polymers

Polymers having sulfonic acid groups covalently bonded to carbon atoms which comprise a portion of the polymer can be prepared by the sulfonation of a pre-formed hydrocarbon polymer by sulfonating or grafting reagents, or by the homopolymerization or interpolymerization of a monomer incorporating a sulfonic acid group or salt of a sulfonic acid. As used herein the term "interpolymer" denotes a polymer comprising more than one monomer, e.g. copolymer, terpolymers, etc. in which the arrangement of the monomer moieties may be random, alternating, block, graft, stereoregular and the like. Suitable examples are grouped as follows:

A. Pre-formed polymers

a. Interpolymers of ethylene and propylene in which the polymers are essentially free of unsaturation (except for chain-end unsaturation) prepared with the aid of cationic, free-radical, alkali metal anionic, or Ziegler-Natta catalysts, i.e. ethylene-propylene rubber (EPR).

b. Random elastomeric interpolymers of one or more $C_4$ to $C_{10}$ conjugated diolefins with one or more $C_4$ to $C_{10}$ Type III mono-olefins, i.e. the family of BUTYL rubbers comprising interpolymers of isobutylene with butadiene, isoprene, piperylene, 1,3-hexadiene, 2,3-dimethyl-1, 3-butadiene and cyclopentadiene.

c. Random interpolymers of ethylene and propylene and one or more $C_6$ to $C_{12}$ acyclic or alicyclic non-conjugated diolefins, i.e. EPDM Non-limiting examples of commercially available EPDM polymers include: terpolymers of ethylene, propylene and 1,4-hexadiene (NORDEL); terpolymers of ethylene, propylene and 5-ethylidene-2-norbornene (VISTALON) and ethylene, propylene and dicyclopentadiene (DUNLOP).

Olefin types are in accordance with the Schmidt and Boord Classification, J.A.C.S. *54,* 751 (1932).

B. Sulfonation of pre-formed polymers

Processes for the sulfonation of hydrocarbon polymers which are: (a) essentially free of olefinic unsaturation except for chain-end unsaturation, or (b) possess a measurable degree of olefinic unsaturation which may be in the polymer backbone chain of carbon atoms or is in an acyclic alkenyl or alkylidene radical or alicyclic radical which is pendant to the backbone chain of carbon atoms, or (c) possess aryl or arylene radicals which comprise the backbone chain of carbon atoms or are pendant to the backbone chain of carbon atoms are old in the art.

EPR rubbers may be sulfonated in solution by means of $SO_2$ and $O_2$ with the aid of a free-radical initiator (Sulfoxidation Reaction), or sulfochlorinated in solution by means of $SO_2$ and $Cl_2$ with the aid of a free-radical initiator (Reed Reaction) followed by hydrolysis of the sulfonyl chloride to the free sulfonic acid or a salt of the sulfonic acid, or by means of complexes or coordination compounds of $SO_3$ with Lewis bases such as triethyl phosphate as disclosed in U.S. Patent 3,205,285. The same reagent has been disclosed in U.S. Patents 3,072,618 and 3,072,619 for the sulfonation of polystyrene and in U.S. Patent 3,432,480 for the sulfonation of *cis*-1,4-polybutadiene. The above three patents and U.S. Patent 3,642,728 which discloses a variety of complexing agents for the sulfonation of nonaromatic polymers such as BUTYL rubber. U.S. Patent 3,836,511 discloses the sulfonation of unsaturated elastomers using acetyl sulfate.

The sulfonations are carried out in solution in an inert hydrocarbon solvent such as hexane, heptane or isooctane, or chlorinated solvents such as ethylene dichloride or chlorobenzene at temperatures in the range of −40°C to 100°C depending on the reactivity of the sulfonation reagent employed.

Ionomers which are melt fabricated are most useful when they have a concentration of ionic groups which is between .1 and 8 mole percent (based on the monomer units of the polymer), more preferably .2 to 6, most preferably .4 to 3 since at concentrations below .1 mole percent the effect of the ionic groups on the physical properties tends to be slight while above 8 mole percent the ionomer tends to become difficult to melt fabricate.

Polymers containing sulfonate groups and in addition containing other anionic groups either on the same polymer molecule or on different polymer molecules are also included in this invention.

II. Ammonium counterions

The ammonium counterions of the polymers of this invention were specified in the above identified formulae (1) and (2). In the case of the ammonium cations of formula (1) within the specifications of this formula, it is preferred that the four substituents of the nitrogen atom be hydrogen or an R group having about 1 to about 30 carbon atoms, which is a straight or branched chain acyclic, alicyclic, aryl, alkaryl or aralkyl group, and more preferably hydrogen or an R group having one to about 26 carbon atoms, provided at least one substituent is an R group having 12 to 50 carbon atoms, preferably 16 to 30 carbon atoms, and most preferably 16 to 26 carbon atoms.

In the case of the di- or polyammonium quaternary cations of formula (2), it is preferred that the R' groups be alkyl groups containing from one to four carbon atoms, more preferably one or two carbon atoms and most preferably one carbon atom.

The preparation of halide salts and hydroxides of the ammonium cations specified in this invention is generally known in the prior art.

A partial list of some ammonium compounds which are suitable as starting materials for preparing the compositions of this invention is given below.

A. Some ammonium salts and amines having at least one substituent containing a $C_{12}$ to $C_{50}$ alkyl group

1. Quaternary higher monoalkyl ammonium salts. Some examples are coco trimethyl ammonium chloride, docosyl trimethyl ammonium chloride, oleyl trimethyl ammonium chloride, stearyl triethyl ammonium bromide, eicosyl diethyl methyl ammonium sulfate, tetradecyl dimethyl benzyl ammonium chloride, hydrogenated tallow di-2-hydroxyethyl methyl ammonium chloride and octadecenyl methyl imidazolinium chloride. Monoalkyl trimethyl ammonium salts are preferred.

2. Quaternary higher dialkyl ammonium salts. Some examples are didodecyl dimethyl ammonium chloride, hydrogenated ditallow ammonium chloride, dodecyl stearyl propyl ethyl ammonium sulfate and dicoco 2-hydroxyethyl methyl ammonium chloride. Dialkyl dimethyl ammonium salts are preferred.

3. Quaternary higher trialkyl ammonium salts. Some examples are triundecylmethyl ammonium bromide and tridodecyl benzyl ammonium iodide. Trialkyl methyl ammonium salts are preferred.

4. Quaternary higher tetraalkyl ammonium salts. An example is tetradodecyl ammonium iodide.

5. Tertiary higher alkyl amines. Some examples are coco dimethyl amine, tetracosyl dimethyl amine, didodecyl methyl amine, pentaethoxylated tallow amine stearyl diethyl amine, tridodecyl amine, and didodecyl benzyl amine. Tertiary higher alkyl amines containing two or one methyl group(s) are preferred.

6. Secondary higher alkyl amines. Some examples are didodecyl amine, decyl docosyl amine, hexadecyl methyl amine, docosyl propyl amine and t-octadecyl hydroxyethyl amine. Higher alkyl methyl amines are preferred.

7. Primary higher alkyl amines. Some examples are stearyl amine, dodecyloxypropyl amine, dodecylthiopropyl amine, and lauryl amine.

8. Higher alkyl diamines having primary, secondary and/or tertiary amino groups. Some examples are octadecyl ethylene diamine, dodecyl tetramethyl decamethylene diamine, tetradecyl xylene diamine and bis-dodecyl piperazine.

9. Higher alkyl triamines having primary, secondary and/or tertiary amino groups such as docosyl ethylene triamine, tris-hexadecyl methylamino cyclohexane.

10. Higher alkyl substituted polyamines such as derivative of polyethylene imine, nitrilo bis-propylamine, and polyvinyl pyridine.

11. Higher alkyl substituted quaternary polyammonium compounds such as decamethylene bis-dodecyldimethyl ammonium dichloride.

B. Some quaternary polyammonium salts

1. Quaternary diammonium compounds. Some examples are decamethylene bis-trimethyl ammonium dichloride, xylene bis-triethyl ammonium dichloride, butenylene bis-diethyl methyl ammonium dichloride, ethylene bis tribenzyl ammonium dibromide, and thio bis-propyl trimethyl ammonium dichloride. Hydrocarbylene bis-trimethyl ammonium compounds are preferred.

2. Quaternary triammonium compounds. Polymethyl dialkylene triammonium compounds are preferred. An example is octamethyl diethylene triamine.

3. Quaternary polyammonium compounds. Some examples are polymethyl polyethylene polyamine, polymethyl polybutenylene polyamine, methylated polyxylene polyamine and methylated polyvinyl pyridine. Polymethylated polyalkylene amines are preferred.

The products of the present invention were characterized by the general formulas (1) and (2) which were described above. Such polymers range in properties from water-soluble polyelectrolytes useful as thickening agents to thermoplastic elastomers which can be extruded, injection molded, vacuum formed, etc. at elevated temperatures. The elastomers are useful as speciality and general purpose rubbers.

Products which have a limited concentration of anionic groups covalently bonded to one or more of the carbon atoms comprising the polymer, when neutralized or partially neutralized with metal cations are generally referred to as ionomers. The acidity of the unneutralized anionic polymer may vary over a wide range; useful acidities being in the range from 0.1 to 200 milliequivalents of hydrogen per 100 grams of the anionic polymer. Such ionomers, when neutralized or partially neutralized with the ammonium cations specified in this invention (rather than with metal cations) are a preferred embodiment of this invention. In particular, such ionomers when based on an elastomeric backbone have applications as thermoplastic elastomers.

The plasticized ionomers of the invention can be readily compounded in conventional elastomer or plastic compounding equipment with additives which are fillers, processing oils, thermoplastic polymers, plasticizers, and pigments and mixtures thereof.

The following examples more fully illustrate the invention.

Example 1

Preparation of quaternary ammonium hydroxides

Four quaternary ammonium halides were obtained from the sources cited below and converted to the hydroxide form by the procedure described below. Dioctadecyldimethylammonium chloride, and octadecyltrimethylammonium chloride were purchased from Lachat Chemical Company. Decamethylene bistrimethyl ammonium dibromide was purchased from City Chemical Company. Triethyloctadecylammonium bromide was prepared via quaternization of triethyl amine by octadecyl bromide.

In order to convert these halides to the hydroxide form, a percolation column having a height to diameter ratio of approximately 15:1 was packed with Amberlyst A-29, a commercially available anionic macroreticular ion-exchange resin marketed as the chloride salt by Rohm and Haas Co., Philadelphia, PA. The resin was converted to the hydroxide form by slowly passing 6.5 bed volumes of a 10 wt.% aqueous solution of reagent grade sodium hydroxide downward through the bed, followed by distilled water until the effluent had a pH of 7.0. The water in the column and in the resin was then displaced by percolating 15 volumes of anhydrous methanol downward through the column.

Each of the above four quaternary ammonium halides was dissolved in 300 ml. of a solvent consisting of either anhydrous methanol or ethanol, or mixtures of these alcohols with either benzene or cyclohexane depending on the solubility characteristics of the particular halide. The various solutions which ranged in concentration from about 0.5 to 20 grams of halide per 300 ml. of solvent were percolated through a freshly prepared column of the hydroxide form of the ion exchange resin. The receiver for the percolated solution was blanketed with oxygen-free nitrogen then sealed and refrigerated until used. Just before use an aliquot of each solution was titrated with standard alkali in order to check the basicity.

In addition to the quaternary ammonium hydroxides which were prepared above, the following quaternary ammonium reagents were purchased in their hydroxide form from Southwestern Analytical Chemicals Company of Austin, Texas.

$$[N(CH_3)_4]^+ [OH]^-$$

$$[N(CH_2CH_3)_4]^+ [OH]^-$$

Example 2

Preparation of quaternary ammonium salts of a sulfonated EPDM

An EPDM available on a commercial scale (VISTALON) from Exxon Chemical Co., New York, New York, which comprised 52 wt.% of ethylene, 43 wt.% of propylene and 5 wt.% of 5-ethylidene-2-norbornene and had a number average molecular weight of 35,000 and a Mooney viscosity ML @ 100°C (1+8 min.) of 42 was sulfonated using acetyl sulfate in accordance with the method disclosed in U.S. Patent 3,836,511. This free acid form of the sulfonated polymer was isolated from solution by steam stripping and dried on a warm two-roll mill. The product was stored at a temperature of −80°C prior to use.

On the afternoon before the day of neutralization the free acid sulfonated polymer was cut into pieces and placed in a mixed solvent consisting of 95% toluene and 5% methanol by volume, to prepare a solution having a concentration of 20 grams per liter. The mixture was stirred at room temperature overnight during which the polymer dissolved except for some small pieces of gel. In the morning the solution was filtered, and on titration of an aliquot was found to have an acidity of 0.39 milliequivalents of hydrogen per 100 ml.

The following quaternary ammonium hydroxides which were described in Example 1, were used to neutralize aliquots of the free acid sulfonated EPDM solution.

1. $[(C_{18}H_{37})_2\, N(CH_3)_2]^+ [OH]^-$
2. $[(C_2H_5)_3\, N(C_{18}H_{37})]^+ [OH]^-$
3. $[(CH_3)_3\, N(CH_2)_{10}\, N(CH_3)_3]^{++} (2[OH])^=$

4. $[(C_{18}H_{37})\ N(CH_3)_3]^+\ [OH]^-$

5. $[N(CH_3)_4]^+\ [OH]^-$

6. $[N(CH_2CH_3)_4]^+\ [OH]^-$

The aliquots of the sulfonated EPDM solution were overbased with each of the quaternary ammonium hydroxide samples by the addition of 1.2 equivalents of the quaternary ammonium hydroxide per equivalent of sulfonic acid. The solutions were stirred under nitrogen for about 10 minutes, checked for basicity and slightly acidified with 2.5% acetic acid in methanol. Approximately 0.25 equivalents of the acetic acid were added per equivalent acidity previously present in the solution. On neutralization some of the samples became cloudy. These cloudy solutions were clarified by the addition of toluene. The products were recovered by precipitation with about 10 volumes of methanol, followed by settling and decantation of the supernatant liquid. In some cases where settling was incomplete, the solutions were centrifuged to consolidate the precipitate. Each of the recovered ionomers was overlaid with sufficient methanol to cover the product; then 0.1% by weight (based on the weight of recovered product) of a phenolic antioxidant (antioxidant 2246) was added to each sample and after standing overnight the methanol was decanted and the products dried at room temperature in a vacuum oven for several days.

While all of the sulfonate groups in the above and subsequent examples were completely neutralized, i.e. 100% neutralization, in certain instances it is desirable to partially neutralize the anionic groups present in the polymer, e.g. 5 to 95% with the quaternary ammonium hydroxides and leave some free acidity or complete the neutralization with a different counterion.

Example 3

Physical properties of a sulfonated EPDM containing monovalent quaternary ammonium counterions

Test pads were molded from the ionomer materials prepared from Samples (1), (2), (4), (5) and (6) of Example 2. The test pads were compression molded at 160°C. using a preheat of 2 minutes and 3 minutes under pressure. Microtensile pads having a thickness of about 0.6 mm. and test regions measuring 2.54 mm. in width and 12.7 mm. in length were cut from the pads.

Tensile strengths of the samples were measured at 25°C. and 100°C. with an Instron TM cable model instrument, using a pulling speed of about 51 mm. per minute. In addition, the melt flow rates of the polymers were determined at 150°C., using the standard capillary and instrument specified in ASTM 1238—70. The weight of the probe plus the added weight was 12.5 kilograms. Flow rates were measured electronically as probe displacement per minute and these results were converted to grams per 10 minutes using a conversion factor. The results are given in Table I.

The first data column in Table I compares the melt flow rates at 150°C. of materials containing various monovalent quaternary ammonium counterions. It is apparent that the samples containing the long-chain counterions (Samples (1), (2) and (4)) have much higher melt flow and are softer than the short-chain counterions (Samples (5) and (6)).

TABLE I

Physical properties of a sulfonated EPDM containing various monovalent quaternary ammonium counterions

| Sample number | Structure of counterion | Melt flow rate 150°C, (1758 kPa) (250 psi) (g/10 min.) | Tensile strength kPa (psi) 25°C | 100°C |
|---|---|---|---|---|
| 1 | $(C_{18}H_{37})_2N^+\ (CH_3)_2$ | 0.020 | 11950(1700) | 490(70) |
| 2 | $(C_2H_5)_3N^+\ (C_{18}H_{37})$ | 0.030 | 7800(1110) | 420(60) |
| 4 | $(C_{18}H_{37})N^+\ (CH_3)_3$ | 0.0085 | — | — |
| 5 | $N^+\ (CH_3)_4$ | 0.0030 | — | — |
| 6 | $N^+\ (C_2H_5)_4$ | 0.0045 | — | — |

Higher melt flow usually results in easier melt processing such as by extrusion or injection molding. Softer elastomers tend to be more appropriate for applications requiring high degrees of flexibility and low stiffness such as, for example, hot melt sealants for joints which experience movement over time, or for gloves or shoe parts which require high flexibility or softness.

The difference in material properties which is caused by substituting quaternary ammonium counterions containing long-chain substituents for shorter chain substituents is more clearly illustrated by direct comparison of the compositions in Table I. Sample (6), containing the tetraethylammonium counterion gives a low melt flow rate of 0.0045 grams per 10 minutes. In one of the ethyl substituents

of Sample (6) is replaced by an octadecyl substituent, Sample (2) is obtained. So, it is seen that the substitution of the long chain for the short chain results in an increase in melt flow by more than 6 times.

Sample (5), which contains the short methyl substituents on the counterion has a very low melt flow rate of 0.0030 grams per 10 minutes. Replacing one of the methyl groups with an octadecyl group gives Sample "4"; it can be seen from Table I that Sample "4" has almost 3 times the melt flow rate of Sample "5". If a second methyl substituent of Sample "5" is replaced by an octadecyl group, then Sample "1" is obtained. Sample "1" which contains the dioctadecyl dimethyl ammonium counterion has over six times the melt flow rate of the tetramethyl ammonium counterion. It is clear from these results that utilizing long-chain substituents instead of short chains in a quaternary ammonium counterion results in materials having better processing (higher melt flow rates), and which are weaker and softer.

Example 4

Physical properties of a sulfonated EPDM neutralized with polyvalent quaternary ammonium counterions

A. A divalent quaternary ammonium counterion

Sample 3 of Example 2 was neutralized with the divalent cation $[(CH_3)_3\,N(CH_2)_{10}\,N(CH_3)_3]^{++}$. Test pads of this material were compression molded at 160°C, and microtensile pads (as described in Example 3) were cut from the pads. Tensile strengths were measured at 25°C and 100°C using a pulling speed of 51 mm. per minute. Also, the melt flow rate was measured using the method described in Example 3. The results were as follows:

| | |
|---|---|
| Sample Number | "3" |
| Structure of Counterion | $(CH_3)_3\,N^+(CH_2)_{10}N^+(CH_3)_3$ |
| Melt Flow Rate at 150°C, 250 psi | 0.0035 g/10 minutes |
| Tensile Strength at 25°C | 12700 kPa (1820. psi) |
| Tensile Strength at 100°C | 1260 kPa (180. psi) |

It is seen that this sample containing this divalent counterion has melt flow rate which is less than one-half of the lowest flow rate long-chain counterion sample of Table I. In fact, the melt flow rate of this material is almost as low as the tetramethyl ammonium counterion sample (Sample "5" of Table I). In addition to its low melt flow rate and resultant high melt strength the divalent sample "3" has a higher tensile strength than the values listed for the long-chain counterion samples in Table I. In particular, Sample "3" has an excellent 100°C tensile strength. This sulfonated material neutralized with this divalent ammonium counterion has a low melt flow rate and high tensile strength at elevated temperature even though its divalent counterion contains a fairly long (ten carbon) chain. Higher tensile strengths are obviously desirable in many applications which subject an article to high stresses, such as hoses or flexible industrial belts. High melt strength can be desirable in some fabrication processes such as blow molding or blow forming of thin flexible sheets.

B. A. polyvalent quaternary ammonium counterion

Magnifloc 577C is a polyvalent quaternary ammonium chemical having the structure

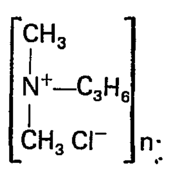

it has a relatively low degree of polymerization. It is manufactured by the America Cyanamid Company. This material was converted to the hydroxide using the procedures of Example 1, and it was used to neutralize a free acid sulfonated EPDM similar to that prepared in Example 2. A solution of this free acid containing 20g of polymer per liter of solvent had an acidity of 0.0057 milliequivalents of hydrogen per 100 ml. The neutralization procedure was similar to that used in Example 2. The isolation of the neutralized solfonated polymer from the solution was as follows. The solution was steam-stripped to remove the solvents and precipitate the ionomer as a crumb for about one-half hour at which time the polymer had lost any tendency toward tackiness. The solids were filtered and washed in a Waring blender successively with methanol, distilled water and methanol. About 0.3 wt.% of a hindered phenol antioxidant (antioxidant 2246) was added to the polymer before each wash. The polymer crumb was air dried at room temperature and further dried at room temperature under a vacuum.

For comparison with this polyvalent quaternary ammonium counterion, tetramethylammonium hydroxide was used for the polyvalent counterion. The neutralization and isolation procedures were similar to the ones used or the polyvalent counterion.

Tensile measurements and melt flow measurements were made on the samples containing the polyvalent tetramethyl ammonium counterions using the methods described in Example 3. It was found

that the sample containing the polyvalent quaternary ammonium counterion had a lower melt flow rate, and higher tensile strengths and modulii at both 25°C and 100°C as compared with the tetramethylammonium counterion. This demonstrates that a sulfonated polymer containing a polyvalent ammonium counterion can result in lower melt flow (and higher melt strength), and higher tensile strength and modulus than monovalent quaternary ammonium counterions of similar structure.

Example 5

Preparation and physical properties of a sulfonated EPDM neutralized with long chain monovalent amines

An EPDM having a Mooney viscosity ML @ 100°C (1+8 min.) of about 20 was used as the starting material for making a lightly sulfonated polymer. This EPDM contained about 5 wt.% of 5-ethylidene-2-norbornene and it contained about 50 wt.% of ethylene. It was sulfonated using acetyl sulfate in accordance with the method disclosed in U.S. Patent 3,836,511, to produce the free acid form of the polymer. This material was isolated by steam stripping and dried on a warm mill. This dried polymeric sulfonic acid was dissolved at a concentration of 30 gram per liter in a mixed solvent consisting of 93% toluene and 7% methanol by volume. By titration of an aliquot, the polymer was found to have an acidity of 25 milliequivalents of acid per 100g of polymer.

The acid form of the lightly sulfonated EPDM was divided into a number of portions, and different portions were neutralized in solution by the long chain amines listed below:

7. $C_{20,22}H_{41,45}NH_2$

8. $C_{20,22}H_{41,45}N(CH_3)_2$

9. $(C_{20,22}H_{41,45})_2\ N(CH_3)$

10. $(C_{12}H_{25})_3\ N$

The double subscripts in Samples 7, 8 and 9 indicate that these materials contain a major amount of both $C_{20}H_{41}$ and $C_{22}H_{45}$ in the long-chain substituent(s). These amines also contain a minor amount of $C_{18}H_{37}$ in their long-chain substituent(s). These three samples were obtained from the Humko Sheffield Chemical Company; Sample 7 as Kemamine P—190—D, Sample 8 as Kemanime T—1902—D, and Sample 9 as Kemamine T—1901. Sample 10, tridodecylamine was obtained from the Eastman Chemical Company.

Portions of the free acid sulfonated EPDM solution were slightly overbased with each of the above long-chain amines by the addition of 1.15 equivalents of the long-chain amine per equivalent of sulfonic acid. The solutions were stirred at room temperature for about 20 minutes. The neutralized polymers were recovered from the solution by steam stripping and dried on a hot two-roll mill. Tensile pads were molded from the amine-neutralized sulfonated EPDM's in the manner described in Example 3, and microtensile test dumbbells were cut from the pads.

Tensile strengths of the sulfonated EPDM's neutralized with the four long-chain amines were measured at room temperature on an Instrom TM table model apparatus at a pulling speed of 51 mm. per minute. In addition, melt flow rate measurements were made using the procedure described in Example 3. The results are shown in Table II.

TABLE II

Physical properties of a sulfonated EPDM neutralized with various long chain amines.

| Sample number | Neutralizing agent | Melt flow rate 150°C 1758 kPa (250 psi)(g/10 min.) | Tensile properties at room temperature Strength kPa (psi) | Elongation (%) | Initial modulus kPa (psi) |
|---|---|---|---|---|---|
| 7 | $C_{20,22}H_{41,45}NH_2$ | 0.044 | 11200(1600) | 600 | 2380(340) |
| 8 | $C_{20,22}H_{41,45}N(CH_3)_2$ | 0.7 | 6825(975) | 840 | 2100(300) |
| 9 | $(C_{20,22}H_{41,45})_2N(CH_3)$ | 1.9 | 5145(735) | 795 | 1925(275) |
| 10 | $(C_{12}H_{25})_3N$ | 2.1 | 1540(220) | 1480 | 1225(175) |

By comparing Samples 7 and 8 of Table II it is seen that substituting methyl groups for hydrogens (attached to the nitrogen atom) greatly inceases the melt flow rate and thereby improves processability. This change also results in a soft material (lower modulus) and tends to reduce strength. In comparing Samples 8 and 9 of Table II it is observed that substituting a long chain in place of a short chain substituent further increases the melt flow rate, and further increases softness. The last sample 10, in Table II illustrates that the presence of additional long-chain substituents, $C_{12}$ in this case, can be more important in increasing melt flow increasing softness than simply having a large amount of hydrocarbon in a lesser number of long chains; e.g., Sample 10 with three long chains but only 36 carbon atoms has greater melt flow and softness than Sample 9 with over 40 carbon atoms.

In order to determine the relative effects on physical properties of neutralizing an ionomer with an amine containing a long-chain substituent of twelve carbons or more as compared with an amine of corresponding structure but containing shorter substituents, a short-chain amine was utilized as a neutralizing agent. Tripropylamine, $N(C_3H_7)_3$, was obtained from Aldrich Chemical Company. It was used to neutralize a portion of the free acid sulfonated EPDM described earlier in this example and it was worked up in exactly the same manner as the materials neutralized with the long-chain amines, and tensile samples were prepared, and tensile and melt flow rate measurements were made.

The physical properties of the sulfonated EPDM neutralized with tripropylamine are presented in Table III. For comparison, results for an amine of similar form (three hydrocarbon substituents of the same structure) but having long (12-carbon) chain substituents are also shown in Table III. It is seen that changing the propyl substituents of Sample 11 to dodecyl substituents to get Sample 10 has a dramatic effect on melt flow rate, strength, softness (modulus), and elongation. The material neutralized with the amine containing the 12 carbon substituents (tridodecyclamine) has over 5 times the melt flow rate of the sample neutralized with tripropylamine; also, Sample 10 is much softer and has much higher elongation and much lower tensile strength. The much higher melt flow rate and greater softness of the material neutralized with the long chain amine make it useful where high processing rates are desirable, such as in injection molding or extrusion. Also, these properties would be useful in caulking compounds and hot melt sealants.

TABLE III

Comparison of a long chain amine with a shorter chain amine as neutralizing agents for a sulfonated EPDM

| Sample number | Neutralizing agent | Melt flow rate 150°C 1758 kPa (250 psi)(g/10 min.) | Tensile properties at room temperature Strength kPa (psi) | Elongation (%) | Initial modulus kPa (psi) |
|---|---|---|---|---|---|
| 11 | $(C_3H_7)_3N$ | 0.37 | 6790(970) | 720 | 2240(320) |
| 12 | $(C_{12}H_{25})_3N$ | 2.1 | 1540(220) | 1480 | 1225(175) |

## Claims

1. A polymer having the general formula:

$$[C{-}A^-]_{p+1}\; R_3N^+ \left[ Q{-}R_2N^+ \right]_p R$$

wherein

C is one of a plurality of carbon atoms comprising a portion of the backbone chain of an EPR, EPDM or Butyl rubber polymer;

$A^-$ is a sulphonate radical covalently bonded to one of said C carbon atoms; and wherein

the R groups represent substituents of the nitrogen atom(s) which are each independently selected from hydrogen, $C_1$ to $C_{50}$ straight or branched chain acyclic, alicyclic, aryl, alkaryl, aralkyl radicals or a substituted functional derivative thereof, provided at least one of the R groups is a $C_{12}$ to $C_{50}$ straight or branched chain acyclic, alicyclic, aryl, alkaryl, aralkyl radical or a substituted functional derivative thereof; and wherein

each Q is independently selected from $C_1$ to $C_{40}$ divalent straight or branched chain alkylene, cycloalkylene, arylene, dialkylene-arylene radicals, a substituted functional derivative thereof of a $-(CHY)_n-Z_m-(CHY)_n$, wherein Z is the hetero atom oxygen or sulphur, m is zero or one, Y is hydrogen, said $C_1$ to $C_{50}$ radical or a substituted functional derivative of said radical and n is an integer of from 1 to 10; wherein

p is from zero (for a monoammonium counterion) to 10, and wherein said ammonium counterion at least partially neutralizes said sulphonate radicals.

2. A polymer according to claim 1 wherein said backbone polymer is an ionomer.

3. A polymer according to claim 2 wherein said ionomer is water insoluble.

4. A polymer according to any one of the preceding claims wherein said sulphonate group is covalently bonded to said C carbon atoms in an amount of from 0.2 to 8 mole percent.

5. A polymer according to any one of the preceding claims to which a filler, an oil, an extender or a mixture thereof has been added.

## Revendications

1. Polymère ayant la formule générale:

$$[C{-}A^-]_{p+1}\; R_3N^+ \left[ Q{-}R_2N^+ \right]_p R$$

dans laquelle C est l'un des nombreux atomes de carbone formant une partie de la chaîne-squelette d'un polymère de caoutchouc butyle, de caoutchouc éthylène-propylène ou d'un terpolymère d'éthylène-propylène: $A^-$ est un radical sulfonate, lié d'une manière covalente à l'un desdits atomes de carbone; et dans laquelle les groupes R représentent des substituants du ou des atomes d'azote qui sont, chacun indépendamment des autres, choisis parmi l'hydrogène, les radicaux aralkyle, alkaryle, aryle, alicycliques, acycliques à chaîne droite ou ramifiée, en $C_1$ à $C_{50}$ ou un de leurs dérivés fonctionnels substitués, à la condition qu'au moins l'un des groupes R soit un radical aralkyle, alkaryle, aryle, alicyclique, acyclique à chaîne droite ou ramifiée, en $C_{12}$ à $C_{50}$ ou un de ses dérivés fonctionnels substitués, et dans laquelle chaque Q est choisi indépendamment parmi les radicaux dialkylènearylène, arylène, cycloalkylène, alkylène bivalents, à chaîne droite ou ramifiée, en $C_1$ à $C_{40}$, un de leurs dérivés fonctionnels substitués ou un $-(CHY)_n-Z_m-(CHY)_n$, où Z est l'hétéroatome oxygène ou soufre, *m* vaut zéro ou un, Y est l'hydrogène, ledit radical en $C_1$—$C_{50}$ ou un dérivé fonctionnel substitué dudit radical, et *n* est un entier de 1 à 10, où *p* est compris entre zéro (pour un contre-ion monoammonium) et 10, et où ledit contre-ion ammonium neutralise, au moins partiellement, les radicaux sulfonate.

2. Polymère selon la revendication 1, dans lequel le polymère-squelette est un ionomère.

3. Polymère selon la revendication 2, dans lequel l'ionomère est insoluble dans l'eau.

4. Polymère selon l'une quelconque des revendications précédentes, dans lequel ledit groupe sulfonate est lié d'une manière covalente aux atomes de carbone C en une quantité de 0,2 à 8% molaire.

5. Polymère selon l'une quelconque des revendications précédentes, auquel on a ajouté une charge, une huile, un diluant ou un de leurs mélanges.

## Patentansprüche

1. Polymer mit der allgemeinen Formel

$$[C{-}A^-]_{p+1}\; R_3N^+ \left[ Q{-}R_2N^+ \right]_p R$$

wobei C eines einer Vielzahl von Kohlenstoffatomen ist, die einen Teil der Gerüstkette eines EPR-, EPDM- oder Butylgummipolymer bilden; $A^-$ ein Sulfonatrest ist, der kovalent an eines der C-Kohlenstoffatome gebunden ist; die R-Gruppensubstituenten am (an den) Stickstoffatom(en) bedeuten, die voneinander unabhängig ausgewählt sind aus Wasserstoff, gerad- oder verzweigtkettigen $C_1$—$C_{50}$ acyclischen, alicyclischen, Aryl-, Alkaryl- oder Aralkylresten oder einem substituierten funktionalen Derivat derselben, wobei, mindestens eine der R-Gruppen ein geradekettiger oder verzweigtkettiger $C_1$—$C_{50}$ acyclischer, alicyclischer, Aryl-, Alkaryl- oder Aralkylrest oder ein substituiertes funktionales Derivat derselben ist; Q unabhängig ausgewählt ist aus divalenten, geradkettigen oder verzweigtkettigen $C_1$—$C_{40}$ Alkylen-, Cycloalkylen-, Arylen- oder Dialkylen-Arylen-Resten oder einem substituierten funktionalen Derivat derselben oder $-(CHY)_n-Z_m-(CHY)_n$, wobei Z das Heteroatom Sauerstoff oder Schwefel ist, m 0 oder 1 ist, Y Wasserstoff, der zuvorgenannte $C_1$—$C_{50}$-Rest oder ein substituiertes functionales Derivat dieses Restes ist und n eine ganze Zahl von 1 bis 10 ist; p null (für ein Monoamoniumgegenion) bis 10 ist und das Amoniumgegenion den Sulfonatrest mindestens teilweise neutralisiert.

2. Polymer nach Anspruch 1, dadurch gekennzeichnet, daß das Gerüstpolymer ein Ionomer ist.

3. Polymer nach Anspruch 2, dadurch gekennzeichnet, daß das Ionomer wasserunlöslich ist.

4. Polymer nach jedem der vorangegangenen Ansprüche, dadurch gekennzeichnet, daß die Sulfonatgruppe in einer Menge von 0,2 bis 8 Mol% kovalent an die C-Kohlenstoffatome gebunden ist.

5. Polymer nach jedem der vorangegangenen Ansprüche, dadurch gekennzeichnet, daß ihm ein Füllstoff, ein Öl, ein Verschnittmittel oder eine Mischung derselben zugesetzt ist.